# EUROPEAN PATENT APPLICATION

(11) **EP 4 335 724 A1**
(43) Date of publication of application: **13.03.2024**
(21) Application number: 23195438.9
(22) Date of filing: 05.09.2023
(51) Int. Cl.: B61L 15/00, B60L 50/53, B61L 3/12, B61L 25/02, B61L 27/20

(54) **ONBOARD SYSTEM FOR OPERATING A RAIL VEHICLE**

(30) Priority: 06.09.2022 GB 202212976
(71) Applicant: Hitachi Rail Limited, London EC4M 7AW (GB)
(72) Inventor: ISHIKAWA, Shinichiro, London, EC4M 7AW (GB); CORASOLLA, Bruno, London, EC4M 7AW (GB)
(74) Representative: Mewburn Ellis LLP

(57) **Abstract**

An onboard system is provided for operating a rail vehicle having plural drive modes powered by respective power sources, and further having train equipment to implement respective changeovers from any one of the drive modes to any other of the drive modes. The onboard system has a train management system configured to issue command signals to the train equipment to implement the changeovers. The onboard system further has signalling equipment configured to send changeover telegrams to the train management system, the changeover telegrams alerting the train management system that the rail vehicle is at a track position at which a changeover from one of the drive modes to another of the drive modes should be made. The signalling equipment further being configured to store predetermined track positions at which said changeovers should be made. The onboard system further has a beacon reader configured to detect changeover telegrams from trackside electronic beacons and to send the detected changeover telegrams to the signalling equipment. The onboard system further has a tracking system configured to obtain tracking data which are updated rail vehicle positions or which are data from which updated rail vehicle positions are derivable by the signalling equipment, and to send the tracking data to the signalling equipment. The signalling equipment is further configured: to relay the changeover telegrams from the beacon reader on to the train management system, to identify updated rail vehicle positions that coincide with any of the stored predetermined track positions, to generate further changeover telegrams on the basis of the identified rail vehicle positions, and to send the further changeover telegrams on to the train management system.

## Description

### Field of the Invention

The present invention relates to an onboard system for operating a rail vehicle having plural drive modes powered by respective power sources.

### Background

Electrified railway routes typically have occasional neutral sections. It is desirable for trains to open circuit breakers on their transformers as the train pantographs traverse such sections to avoid drawing current and thereby eliminate arcing. Trackside electronic beacons (inductive or radio frequency) can conveniently be attached to sleepers, and are conventionally used to signal the entrance to and exit from neutral sections. The trains have readers which detect signal telegrams produced by these beacons, and the train is arranged to automatically open and close the circuit breakers in response to the telegrams. Some types of beacon are actively powered e.g. using signalling supply. Other types are passive, responding to a low frequency signal and receiving their energy from a passing train, and then sending telegrams to the train in response.

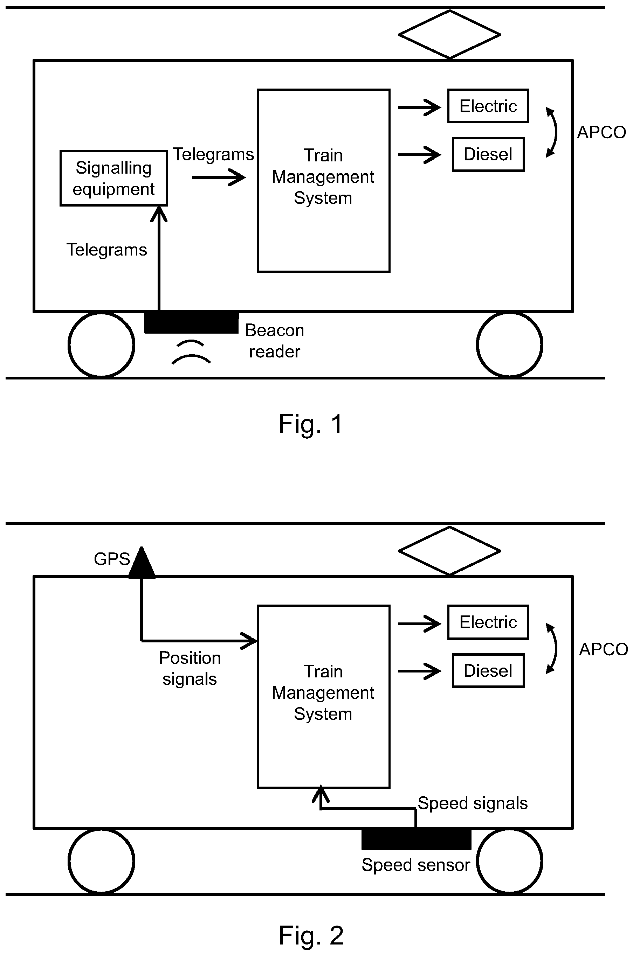

Similarly, bi-mode trains, which have the capability to travel on both electrified and non-electrified routes, can use a similar track side beacon arrangement to signal transitions between electrified and non-electrified routes, thereby enabling the trains to switch between external (overhead or third rail) electrical power and onboard diesel engine power. For example, as shown schematically in Figure 1, a typical onboard Automatic Power ChangeOver (APCO) system installed on the train may include signalling equipment to receive changeover telegrams detected by a beacon reader and to relay these on to a computer-based train management system (TMS) which receives the telegrams from the signalling equipment, and in response automatically manages the changeovers between external electric power (e.g. overhead line) and onboard power (e.g. diesel).

As shown schematically in Figure 2, another option for identifying these transitions is for the TMS to directly receive train position information, such as GPS position signals or tachometer speed information. The TMS can make comparisons between the current travelling position of the train determined from this information, and electrified and non-electrified route information stored in advance. It can then manage changeovers on the basis of the comparisons.

In both options, if an automatic changeover fails, it is possible for a driver to intervene to manually enforce the changeover.

### Summary of the Invention

A problem arises, however, in that, while managing changeovers based on receiving telegrams from trackside electronic beacons is highly reliable, there are many sections of rail networks where such beacons are not installed and it may be desired to run trains requiring changeovers on sections both with beacons and without. Also beacons, by their nature, can only be used to signal changeovers at fixed positions on the network. When all the desired changeovers are between external electrical power and an onboard power source, this may not be problematic. However, if it is wanted to implement different types of changeover, e.g. between two different drive modes which both involve only onboard power sources, it may be desirable to shift and adapt changeover patterns depending on operational requirements, and the fixed positions of trackside beacons are not particularly compatible with such flexible changeover arrangements.

On the other hand, while basing changeovers purely on GPS or tachometer information can provide flexibility, this arrangement can also be unreliable, and does not allow a train to make use of the more dependable trackside beacon infrastructure.

The present invention has been devised in light of the above considerations.

In a first aspect, the present invention provides an onboard system for operating a rail vehicle having plural drive modes powered by respective power sources, and further having train equipment to implement respective changeovers from any one of the drive modes to any other of the drive modes, the onboard system having:
a train management system configured to issue command signals to the train equipment to implement the changeovers;
signalling equipment configured to send changeover telegrams to the train management system, the changeover telegrams alerting the train management system that the rail vehicle is at a track position at which a changeover from one of the drive modes to another of the drive modes should be made, and the signalling equipment further being configured to store predetermined track positions at which said changeovers should be made;
a beacon reader configured to detect changeover telegrams from trackside electronic beacons and to send the detected changeover telegrams to the signalling equipment; and
a tracking system configured to obtain tracking data which are updated rail vehicle positions or which are data from which updated rail vehicle positions are derivable by the signalling equipment, and to send the tracking data to the signalling equipment;
wherein the signalling equipment is further configured: to relay the changeover telegrams from the beacon reader on to the train management system, to identify updated rail vehicle positions that coincide with any of the stored predetermined track positions, to generate further changeover telegrams on the basis of the identified rail vehicle positions, and to send the further changeover telegrams on to the train management system.

Advantageously, the onboard system allows changeover telegrams to be sent to the train management system which are actual telegrams detected by the beacon reader or are "virtual telegrams" generated on the basis of the updated rail vehicle positions from the tracking system. Thus, the system combines the reliability of trackside beacons with the flexibility of a position tracking system. However, significantly, the tracking data from the tracking system are sent to the signalling equipment for the generation of the further changeover telegrams, rather than being sent directly to the train management system. Thus the train management system does not need to store the predetermined track positions, and further the train management system does not need to derive the updated rail vehicle positions itself. Moreover, from the perspective of the train management system, a changeover telegram originating from the beacon reader may be indistinguishable from one originating from the tracking system. These features facilitate implementation of the onboard system by upgrade of existing rail vehicles, e.g. of the type shown schematically in Figure 1. In particular, substantial alteration of the (generally complicated) train management system can be avoided. By concentrating data storage and signal processing relating to telegram generation in the signalling equipment rather than in the train management system, the onboard system also facilitates future system improvements or evolution, e.g. to update the stored predetermined track positions, or to change the tracking system.

Preferably the tracking system continuously obtains the tracking data so that the signalling equipment continuously receives or derives the updated rail vehicle positions, i.e. the signalling equipment continuously receives or derives the current rail vehicle position.

The tracking system may include a wireless receiver configured to receive tracking data in the form of electromagnetic signals from which the updated rail vehicle positions are derivable e.g. by the receiver or the signalling equipment. For example, the wireless receiver may include a global positioning system (GPS) receiver. Additionally or alternatively, the wireless receiver may include a telecommunications receiver for communicating with local wayside transmitters, such as CBTC (Communications-Based Train Control) signalling system transmitters or ETCS (European Train Control System) transmitters.

Additionally or alternatively, the tracking system may include a speed detector configured to measure tracking data in the form of rail vehicle speed from which the updated rail vehicle positions are derivable, e.g. by integration of vehicle speed to provide vehicle position along a known route. For example, the speed detector may be a tachometer. In this case, the derivation of the updated rail vehicle positions is typically performed by the signalling equipment.

The power sources of the rail vehicle may include external electrical power (overhead line or third rail) and any one, any two or all three of: onboard battery power, onboard internal combustion engine (e.g. diesel engine) power, and onboard fuel cell power. For example, in a train with external electrical power, onboard battery power and onboard internal combustion engine power, there may be three possible drive modes (external electrical power, hybrid internal combustion and battery, and battery only) and hence six possible changeovers, namely: external electrical to battery, battery to external electrical, external electrical to hybrid, hybrid to external electrical, battery to hybrid, and hybrid to battery.

The signalling equipment may be further configured to prioritise sending of the relayed changeover telegrams from the beacon reader over sending of the further changeover telegrams (generated on the basis of the identified rail vehicle positions) on to the train management system. For example, the beacon reader telegrams may relate principally to changeovers involving the activation of deactivation of external electrical power, and these changeovers should typically be prioritised over other changeovers relating solely to onboard power supplies.

The signalling equipment may be further configured to command automatic braking and/or automatic acceleration of the rail vehicle in response to selected ones of the changeover telegrams (which can be from the beacon reader and/or can be the further changeover telegrams).

The train management system may be further configured to communicate with the signalling equipment to adjust the predetermined track positions stored by the signalling equipment. For example, if one of the power sources is an onboard electrical storage system (e.g. a battery) and the train management system detects that the state of charge of the electrical storage system is below a predetermined level, then it may be desirable for the vehicle to switch to a drive mode in which the electrical storage system can be charged. In such circumstances, the communication with the signalling equipment can request the signalling equipment to introduce a new predetermined track position or move an existing predetermined track position so that a further changeover signal is generated that causes changeover to that drive mode to occur relatively soon in the vehicle's journey.

The onboard system may be a first onboard system for operating a first rail vehicle, and the signalling equipment of the first onboard system may then further have a communications interface for two-way communication with the signalling equipment of a second onboard system for operating a second rail vehicle which can form a train with the first rail vehicle. For example, the first and second vehicles may be front and rear vehicles of a train. By allowing the two items of signalling equipment to communicate, the changeovers of the two vehicles may be synchronised and made compatible with each other.

In a second aspect, the present invention provides a rail vehicle having:
plural drive modes powered by respective power sources of the rail vehicle;
train equipment to implement respective changeovers from any one of the drive modes to any other of the drive modes; and
the onboard system according to the first aspect for operating the rail vehicle.

In a third aspect, the present invention provides a train comprising a first rail vehicle (e.g. a front vehicle) according to the second aspect and a second rail vehicle (e.g. a rear vehicle) according to the second aspect, wherein the signalling equipment of the onboard system of the first rail vehicle has a first communications interface, and the signalling equipment of the onboard system of the second rail vehicle has a second communications interface, the first and second communications interfaces being connected for two-way communication therebetween.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows a conventional onboard rail vehicle system for producing changeovers between external electrical power and onboard diesel engine power drive modes;
**Figure 2** shows a further conventional onboard rail vehicle system for producing changeovers between external electrical power and onboard diesel engine power drive modes;
**Figure 3** shows a schematic of a drive system for a train;
**Figure 4** shows schematically an onboard rail vehicle system for producing changeovers;
**Figure 5** shows schematically a variant of the onboard rail vehicle system of Figure 4;
**Figure 6** shows schematically a further variant of the onboard rail vehicle system of Figure 4;
**Figure 7** shows schematically a further variant of the onboard rail vehicle system of Figure 4; and
**Figure 8** shows schematically a train formed with front and rear vehicles, each installed with an onboard rail vehicle system similar to that shown in Figure 6.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

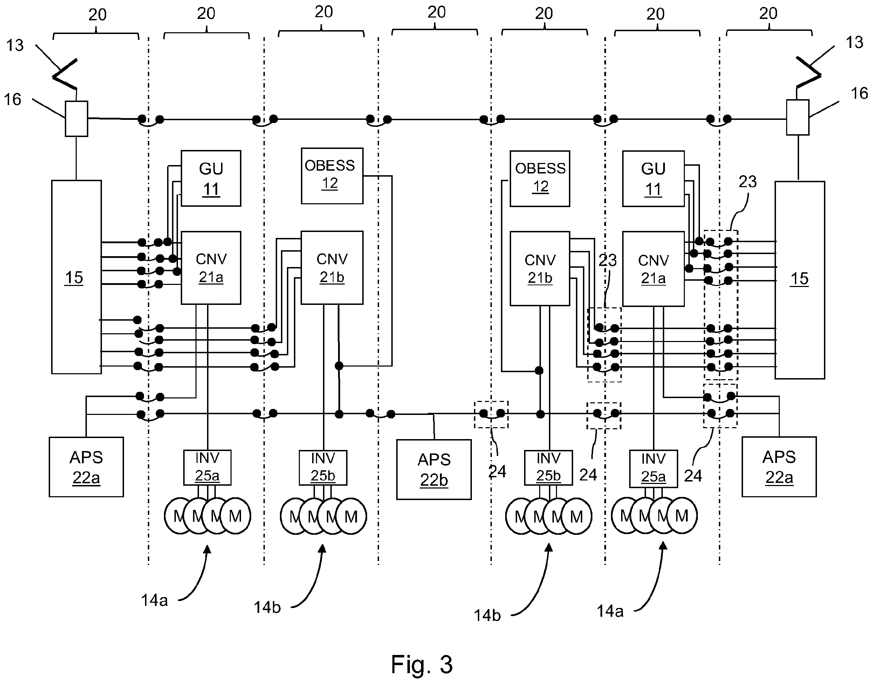

Figure 3 shows a schematic of the drive system for a train, sometimes referred to as a tri-mode train. The train is driven by traction motors 14a and 14b using electrical power provided by the external power supply infrastructure, or by generator units, GUs, 11 with optional support from the on-board energy storage systems, OBESSs, 12, or by the OBESSs alone according to a drive mode being provided by a control system. The control system in turn receives a command signal from a train management system (discussed in more detail below) to implement changeovers between drive modes.

External current collectors 13 are provided to connect to the external power supply infrastructure on electrified sections of the railway line. Typically, the external current collectors are roof-mounted pantographs, which are raised by the control system of a train management system to connect to overhead lines (OHL) (not shown). However, they may be shoe gear provided beneath the train for connecting to live rails along the tracks. Main voltage transformers 15 are provided to adjust the voltage level between the external power supply infrastructure and the on-board systems. Vacuum circuit breakers (VCBs) 16, or similar, are provided to disconnect the pantographs from the main voltage transformers when they are not in use.

Typically, each GU 11 combines a diesel engine and an electricity generator powered by that engine to produce AC electrical power. However, other arrangements are possible. For example, the GUs could be fuel cells in which a fuel, such as hydrogen, is oxidised to generate DC electrical power. Each OBESS 12 is typically a battery system having an associated state of charge (SoC).

The train may comprise a series of coupled cars 20 in which, as shown in Figure 3, some cars contain respective GUs 11 and first traction motors 14a, and other cars contain respective OBESSs 12 and second traction motors 14b. Alternatively, the GUs and OBESSs may be housed in the same cars, along with their respective first and second traction motors.

Other cars are shown in Figure 3 which do not contain GUs or OBESSs, such as for example the lead and tail cars which typically carry the external current collectors 13 and house the main voltage transformers 15. Auxiliary power supply (APS) units 22a, 22b provided to power the train's auxiliary systems (i.e. power outlets, lights, doors, and air-conditioning systems etc.) may conveniently be located in cars without GUs and OBESSs.

First converter-inverter devices are provided on the cars with the GUs 11 and second converter-inverter devices are provided on the cars with the OBESSs 12. Each first converter-inverter device comprises a first converter circuit 21a and a first inverter circuit 25a joined to its converter circuit by a first DC link, the device providing three phase AC power from the first inverter circuit to drive respective first traction motors 14a. Similarly each second converter-inverter device comprises a second converter circuit 21b and a second inverter circuit 25b joined to its converter circuit by a second DC link, the device providing three phase AC power from the second inverter circuit to drive respective second traction motors 14b. The first and second converter circuits contain AC/DC converters to convert AC electrical power from the external current collectors 13 to DC electrical power. Moreover, in the case of the first converter circuits, these AC/DC converters can also convert AC electrical power from the GUs to DC electrical power. In the case of the second converter-inverter devices, the second DC-links can receive DC electrical power from the OBESSs.

Capacitors (not shown) help the first and second DC links to maintain constant DC voltages. When the DC links receive electrical power from the external current collectors 13 or the GUs 11 they are maintained at a first DC voltage and when DC links receive electrical power from the OBESSs 12 they are typically maintained at a second, different, DC voltage.

The control system manages the first 21a and second 21b converter circuits, and the first 14a and second 14b traction motors. Generally, the control system has a speed controller operable (e.g. by a driver) to select a target vehicle velocity which is converted into target torques for the traction motors. The control system adjusts the amount of electrical power supplied to the first and second traction motors to achieve the target vehicle velocity.

The APS units 22a, 22b receive DC electrical power from the first and second DC links, with the DC electrical power being conducted to neighbouring cars though inter-car DC electrical connectors 24. The control system can close such DC electrical connectors 24 along connecting lines joining APS units as needed to enable sharing of DC electrical power between selected APS units, as discussed in more detail below. However, the control system can also open the DC electrical connectors 24 to electrically isolate the APS units from each other.

In the overhead mode, high voltage, single phase AC electrical power is obtained from the OHLs through the pantographs 13 and applied, via the closed VCBs 16, to the main voltage transformers 15. The resulting reduced voltage AC electrical power is supplied to the first 21a and second 21b converter circuits. The AC electrical power is conducted to neighbouring cars though inter-car AC electrical connectors 23. The AC electrical power is converted to DC electrical power in the first 21a and second 21b converter circuits. The DC electrical power is then conducted by the first and second DC links to the first 25a and second 25b inverter circuits which provide the three phase AC power required by the first 14a and second 14b traction motors. In this way the first and second traction motors can provide torque contributions using electrical power from the external power supply infrastructure. During this operation, the first and second DC links are maintained at the first DC voltage.

The OBESSs 12 may be fitted with DC choppers to step down the first DC voltage in order to enable charging of the OBESSs using electrical power from the OHLs. In this way the OBESSs can increase their SoC on electrified sections of the railway line.

Furthermore, when the train is actively braking, the control system may operate the first 14a and second 14b traction motors as generators to produce a negative torque contribution. The traction motors thus act as generators to convert kinetic energy of the train into regenerated electrical power. The regenerated electrical power can be fed back to the external power supply infrastructure via the inverter circuits 25a, 25b, the converter circuits 21a, 21b, the transformers 15 and the pantographs 13. However, another option is for the regenerated electrical power from the second traction motors, and optionally the first traction motors, to be stored in the OBESSs 12 to increase their SoC. Yet another option is for the regenerated electrical power from the first traction motors, and optionally the second traction motors, to be dissipated as heat in brake grid resistors (not shown).

When electrical power is applied to the DC links, step changes in voltage and capacitive loads can induce high in-rush currents. To avoid system damage by these high currents, first soft-charging circuits (not shown) can be provided between the main voltage transformers 15 and the converter circuits 21a, 21b to limit the current while the first and second DC links are being charged to achieve the first DC voltage. In particular, the control system can be configured to connect the main voltage transformers to the converter circuits using the first soft-charging circuits when switching from either of the self-powered drive modes to the externally powered drive mode, or when bringing the DC links to the first DC voltage at the beginning of train operation.

In the hybrid mode, electrical power is provided to the first traction motors 14a from the GUs 11. During acceleration phases electrical power is also provided to the second traction motors 14b from the OBESSs 12.

The main voltage transformers 15 are disconnected from the first 21a and second 21b converter circuits and the external current collectors are disconnected from the external power supply infrastructure, for example by lowering the pantographs 13. The VCBs 16 are also opened.

Three-phase AC electrical power generated by the GUs 11 is supplied to the first converter circuits 21a and converted to DC electrical power which is conducted in the first DC links. These are maintained at the first DC voltage. The first inverter circuits 25a invert the DC electrical power to three phase AC power to drive the train using the first traction motors 14a.

DC electrical power outputted by the OBESSs 12 is supplied to the second DC links, which are maintained at the second DC voltage. The DC electrical power is inverted by the second inverter circuits 25b to provide the three phase AC power required by the second traction motors14b.

Second soft-charging circuits may be provided between the OBESSs 12 and their second DC links to limit in-rush current when bringing the DC links to the second DC voltage. For example, the control system can connect the OBESSs to their DC links using the second soft-charging circuits when first charging the DC links to the second DC voltage at the beginning of train operation, or when switching from the externally powered drive mode to either of the self-powered drive modes.

DC electrical power can be provided to neighbouring cars that do not have GUs 11 or OBESSs 12 through the inter-car DC electrical connectors 24. The APSs 22a, 22b have their own inverters and transformers enabling them to receive power at either the first or second DC voltage. In particular, first APS units 22a connected to the first converter-inverter devices receive power at the first DC voltage, and are isolated from second APS units 22b connected to the second converter-inverter devices which receive power at the second DC voltage. Therefore, in the hybrid self-powered drive mode the first APS units 22a and the second APS units 22b receive power at different voltages. However, the transformers within the APS units allow the first and second APS units to provide the same voltage to the auxiliary systems regardless of their input power source.

In the hybrid self-powered drive mode, the control system adjusts the amount of electrical power generated by the GUs 11 and outputted by the OBESSs 12 to achieve target torques for the first 14a and second 14b traction motors. Typically the control system is configured to prioritise the generation of power from the GUs, with torque being mainly provided by the first traction motors. When the GUs and first traction motors are unable to achieve the target torques, the control system demands power from the OBESSs to provide additional torques from the second traction motors. This is most likely to happen during the acceleration phase of a journey when the GUs operate at full power. When the railway vehicle reaches the target velocity, the target torques are reduced and the control system reduces the power demanded from the OBESSs and then the GUs, and the vehicle enters a "cruising" state. If the target torques reduce further to zero (and there is no active braking of the vehicle), "cruising" becomes "coasting".

When active braking of the train is required, one braking option in the hybrid self-powered mode is for the control system to perform regenerative braking. In this case the second traction motors 14b operate as generators to produce a negative torque contribution. The second traction motors thus operate as generators, and kinetic energy of the railway vehicle is converted into regenerated electrical power which is used to charge the OBESSs 12. In this way, the OBESSs can improve fuel consumption by using the regenerated power to provide support to the GUs 11 during acceleration.

However, the diesel engines of GUs 11 of trains operating in the hybrid self-powered drive mode still consume fuel and generate carbon dioxide emissions because the GUs are always running in this mode. In particular, combustion engines consume fuel and produce emissions even when idling. However, the third OBESS-only drive mode enables the GUs to be disabled, reducing overall fuel consumption and emissions for a journey.

Moreover, in the hybrid self-powered drive mode the first DC links and second DC links are operated at the first and second DC voltages and are thus electrically isolated from each other. Therefore, only regenerative power from generator operation of the second traction motors 14b and inverter circuits 25b can be used to charge the OBESSs. Regenerated power from generator operation of the second traction motors 14a and inverter circuits 25a associated with the GUs can be dissipated in brake grid resistors.

In the battery-only mode, the control system disables the GUs 11 and electrical power is provided to the first 14a and second 14b traction motors from the OBESSs 12 alone. Thus, the combustion engines can be powered off, saving fuel and reducing emissions.

DC electrical power outputted by the OBESSs 12 is supplied to the second DC links. These links are therefore maintained at the second DC voltage. The control system brings the second DC links to the second DC voltage using the second soft-charging circuits as part of switching from the externally powered drive mode to the OBESS-only drive mode. The second inverter circuits 25b invert the DC electrical power to three phase AC power to drive the train using the second traction motors 14b.

The control system can perform regenerative braking in which the second traction motors 14b operate as generators to produce a negative torque contribution. The second traction motors thus operate as generators, and kinetic energy of the railway vehicle is converted into regenerated electrical power which is used to charge the OBESSs 12. Similarly, the first traction motors 14a may be operated as generators to perform regenerative braking and increase the state of charge of the OBESSs.

In addition, the control system is configured to close inter-car DC electrical connectors 24 along the connecting lines joining the first 22a and second 22b APS units. Thus DC electrical power outputted by a given OBESSs 12 can be shared across more than one APS unit. Accordingly, all the APS units connected in this way are configured to power the auxiliary systems using DC electrical power provided at the second DC voltage. Advantageously, this arrangement allows the GUs 11 to be shut down completely while still ensuring power is provided to all the APS units and essential systems.

Furthermore, the drive system is configured such that electrical power outputted by the OBESSs 12 can be used to drive the first traction motors 14a. Advantageously, this allows the same motive power to be achieved in the OBESS-only drive mode as in the externally powered and hybrid self-powered drive modes. Moreover, the connection of the OBESSs to the first traction motors allows generator operation of the first traction motors and the first inverter circuits 25a to be used to charge the OBESSs during regenerative braking. This arrangement enables more kinetic energy of the train to be recovered during braking and reused by the OBESSs.

For example, in one arrangement, the control system is configured so that the second DC links provide DC electrical power to the first DC links via closure of internal APS contactors of the first APS units 22a. A similar function, however, can be achieved by closure of the DC electrical connectors 24 on the connecting lines between the first APS units 22a and their respective first DC links. In this case, any internal APS contactors of the first 22a and second 22b APS units are kept closed allowing these DC electrical connectors 24 to act as APS contactors managing connecting/disconnecting of the first and second DC-links. Whether the APS contactors are of the internal type or are of external type formed by the DC electrical connectors 24, DC electrical power flows from the second converter-inverter devices associated with the OBESSs 12 to the first converter-inverter devices in the opposite direction to its direction of flow in the other drive modes. Thus the first DC links are maintained at the second DC voltage in the third drive mode, and this DC electrical power is then inverted to three phase AC power by the first inverter circuits 25a to drive the first traction motors 14a. This arrangement allows the OBESSs to provide power to the both the first and second traction motors with little or no additional drive system infrastructure.

However, alternative arrangements may also be possible. For example, the first traction motors 14a may be disabled in the OBESS-only drive mode, or additional inverter circuits may be provided to invert DC electrical power from the OBESSs to AC electrical power in order to directly drive the first traction motors 14a without using the first DC links.

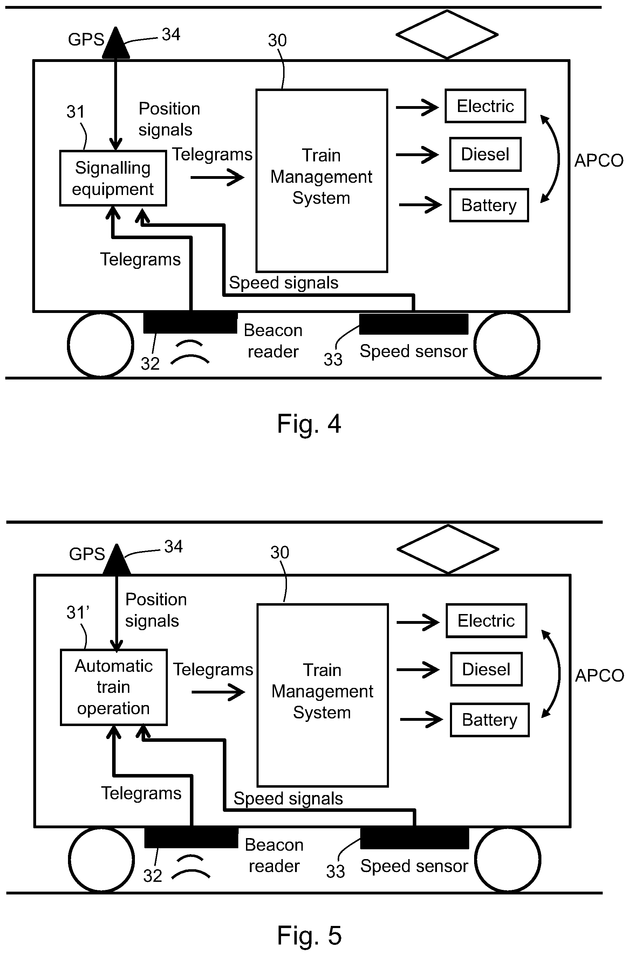

Figure 4 shows schematically an onboard rail vehicle system for producing changeovers between the overhead, hybrid self-powered and OBESS-only drive modes of the drive system of Figure 3, although it can also be used to produce changeovers for rail vehicles having other drive modes.

The onboard system includes a TMS 30 which issues command signals to the train equipment (i.e. the control system and drive system of Figure 3) to implement APCOs. These command signals are prompted by changeover telegrams received from signalling equipment 31.

Some of the changeover telegrams derive from trackside electronic beacons. The onboard system has a beacon reader 32 which reads changeover telegrams from the beacons and sends them to the signalling equipment 31, which in turn relays them to the TMS 30.

Other of the changeover telegrams, however, derive from a tracking system which obtains tracking data to provide or derive continuously updated rail vehicle positions for the signalling equipment. There are various options by which the tracking system and the signalling equipment can continuously determine current rail vehicle position. One option is to provide a wireless receiver, such as a GPS receiver 34, configured to receive tracking data in the form of electromagnetic signals from which the updated rail vehicle positions are derivable by the receiver or the signalling equipment. Another option is to provide a speed sensor 33 (e.g. a wheel or axle tachometer) which sends speed signals to the signalling equipment from which the updated rail vehicle positions are derivable by the signalling equipment, for example by integration of vehicle speed to provide vehicle position along a known route. The onboard system may have more than one of these options for validation and to provide redundancy.

The signalling equipment 31 stores a database of predetermined track positions at which changeovers should be made, and compares continuously updated rail vehicle positions derived from the tracking system with the predetermined track positions in the database. When the signalling equipment identifies updated rail vehicle positions that coincide with stored predetermined track positions, it generates corresponding further "virtual" changeover telegrams, and sends the further changeover telegrams on to the TMS 30.

Thus the TMS 30 receives both "actual" changeover telegrams relayed on from the beacon reader 32, and "virtual" changeover telegrams generated by the signalling equipment 31. In this way, the onboard system combines the reliability of trackside beacons with the flexibility of a position tracking system when alerting the TMS of the needs for changeovers. Moreover, by storing the predetermined track positions in the database of the signalling equipment 31 rather than in the TMS 30, facilitates adoption of the system, for example by an upgrade to existing rail vehicles which does not require adaptation of the TMS interface to the signalling equipment.

Particularly along suburban lines, many tracks do not have overhead lines, and the ability to switch efficiently between drive modes is needed. However, in these regions the traffic density may be relatively low and/or accurate positional control of changeovers may not required, and so the number of trackside beacons also tends to be low. In these circumstances, when the train reaches one of the predetermined track positions, the signalling equipment 31 generates one of the "virtual" changeover telegrams on receipt of which the TMS 30 can perform an APCO.

In regions of the network where APCOs are performed based on telegrams received from trackside beacons, the signalling equipment 31 can suppress the generation of the "virtual" changeover telegrams and rely instead solely on the "actual" telegrams. On the other hand, rather than total suppression, the signalling equipment can simply decrease the priority of generation of "virtual" telegrams and prioritise the relaying of "actual" telegrams. Alternatively, these prioritisation functions may be executed by the TMS 30, but in this case the TMS has to be able to distinguish between "actual" and "virtual" changeover telegrams. To facilitate any reconfiguration of the TMS that this additional functionality may require, it is preferable that the distinguishing and prioritisation functions are localised, e.g. in the TMS interface to the signalling equipment as this may be relatively distinct and separable from the rest of the TMS.

As an example of the suppression or prioritisation function discussed above, the signalling equipment or the TMS interface to the signalling equipment may operate to determine whether a "virtual" telegram is to be accepted for subsequent processes by the TMS. In more detail, if the train is driving in areas covered by overhead lines or in adjacent boundary areas (hereafter "highly constrained" areas), APCOs corresponding to those areas need to be performed with high reliability and positional accuracy because a failure to correctly perform an APCO from or to the overhead mode may cause disruption, not just to operation of the particular train, but to wider scale operational continuity over the linked rail network. On the other hand, when the train is operating in the hybrid self-powered drive mode or the battery-only mode outside these areas (i.e. in "unconstrained" areas), APCOs switching between these modes may be adequately performed with less precise positional accuracy. Consequently, the physical beacons are typically located in "highly constrained" areas, and while the train is in these areas it can expect to receive changeover telegrams from such beacons. Accordingly, the signalling equipment or the TMS interface to the signalling equipment may be configured to prioritize "actual" telegrams over "virtual" telegrams in "highly constrained" areas. For instance, when the train is travelling inside or close to (but still outside) a "highly constrained" area, the prioritisation function may be implemented by delaying the performance of an APCO derived from a "virtual" telegram for a short period of time (e.g. a number of seconds) during which the beacon reader 32 actively searches for any incipient beacon signals. Similarly, when travelling inside but close to a boundary of a "highly constrained" area, performance of an APCO derived from a "virtual" telegram may be delayed until the train has left the area. The length of any such delay may be managed by the signalling equipment or the TMS interface, or by the "virtual" telegram itself, for example, by having the "virtual" telegram also carry an indication of a suitable delay period. This period can be provided in units of time or in units of distance travelled in order to allow for different train speeds.

Figure 5 shows schematically a variant of the onboard rail vehicle system of Figure 4. In this variant, the signalling equipment is part of a more elaborate Automatic Train Operation (ATO) device, which as well as sending changeover telegrams to the TMS 30, has functionality to brake and/or accelerate the train as necessary. This additional functionality is typically also controlled by telegrams received from trackside beacons.

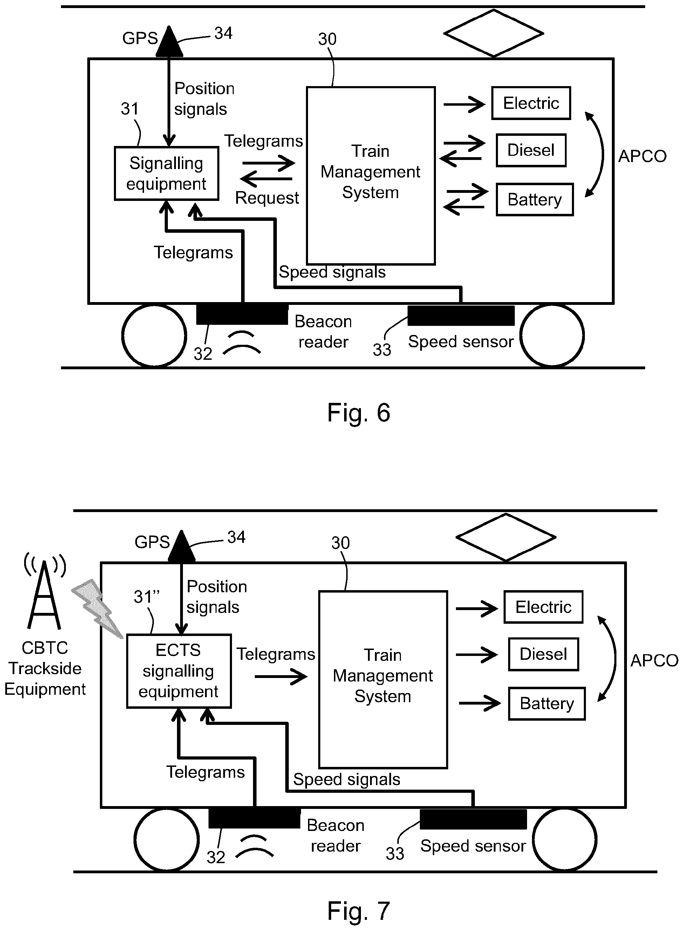

Figure 6 shows schematically a further variant of the onboard rail vehicle system of Figure 4. In this variant, two-way communication is implemented across the interface between the TMS 30 and the signalling equipment 31. Advantageously, this allows the TMS to request changes to the database of predetermined track positions stored by the signalling equipment. For example, if the TMS detects that the state of charge of the OBESSs 12 is lower than expected, it may be desirable to switch earlier than planned from the OBESS-only drive mode to the hybrid self-powered drive mode in order that the OBESSs can be recharged. Thus the TMS can request that a new predetermined track position is created in the database or that an existing predetermined track position is shifted in order to bring about this earlier APCO. It is thus effectively possible to perform APCOs based on the amount of energy that each onboard power source can supply, rather than at fixed positions.

Figure 7 shows schematically a further variant of the onboard rail vehicle system of Figure 4. In this variant, the wireless receiver includes a telecommunications receiver configured to receive signals from Communications-Based Train Control (CBTC) trackside equipment. For example, when a train equipped with European Train Control System (ETCS) on-board signalling equipment 31" travels in a section of rail network where CBTC is installed, the ETCS equipment can calculate the position of the train based on the information received from the CBTC trackside equipment, and can generate and send the virtual changeover telegrams to the TMS 30 on this basis.

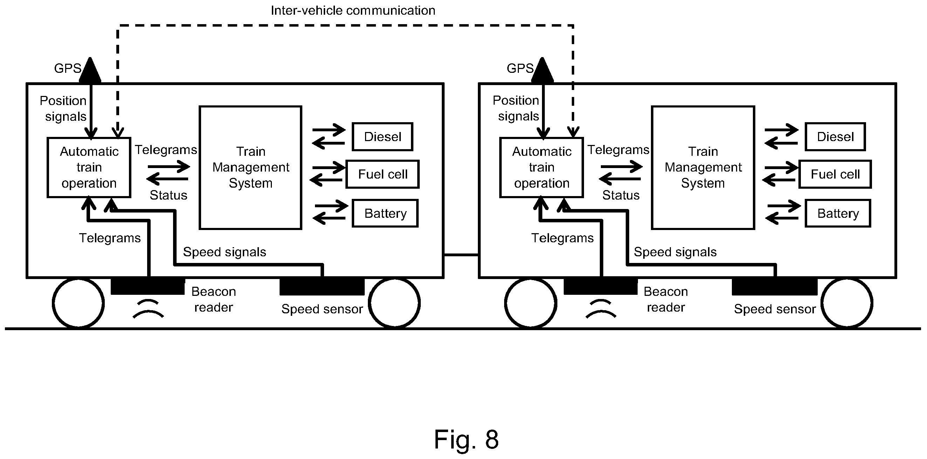

Figure 8 shows schematically a train formed with front and rear vehicles, each installed with an onboard rail vehicle system similar to that shown in Figure 6 in which the TMS can determine the status of the onboard power sources (but in this case diesel, fuel cell and battery) of that vehicle. Intermediate cars (not shown) may be interposed between the front and rear vehicles. The signalling equipment of the onboard system of each vehicle has a respective communications interface which is connected, for two-way communication therebetween, with the communications interface of the signalling equipment of the onboard system of other vehicle. This connection can be by an inter-vehicle communications line, or by the intermediary of trackside transmission.

Either way, with the two-way communication in place, it is possible to synchronise and make compatible the drive modes selected for each vehicle depending on operational requirements. For example, the left hand vehicle in Figure 8 may operate under a battery-only drive mode, while the right hand vehicle may operate under a fuel cell-based hybrid drive mode.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. An onboard system for operating a rail vehicle having plural drive modes powered by respective power sources, and further having train equipment to implement respective changeovers from any one of the drive modes to any other of the drive modes, the onboard system having:
a train management system (30) configured to issue command signals to the train equipment to implement the changeovers;
signalling equipment (31, 31', 31") configured to send changeover telegrams to the train management system, the changeover telegrams alerting the train management system that the rail vehicle is at a track position at which a changeover from one of the drive modes to another of the drive modes should be made, and the signalling equipment further being configured to store predetermined track positions at which said changeovers should be made;
a beacon reader (32) configured to detect changeover telegrams from trackside electronic beacons and to send the detected changeover telegrams to the signalling equipment; and
a tracking system configured to obtain tracking data which are updated rail vehicle positions or which are data from which updated rail vehicle positions are derivable by the signalling equipment, and to send the tracking data to the signalling equipment;
wherein the signalling equipment is further configured: to relay the changeover telegrams from the beacon reader on to the train management system, to identify updated rail vehicle positions that coincide with any of the stored predetermined track positions, to generate further changeover telegrams on the basis of the identified rail vehicle positions, and to send the further changeover telegrams on to the train management system.

2. The onboard system according to claim 1, wherein the tracking system includes a wireless receiver configured to receive tracking data in the form of electromagnetic signals from which the updated rail vehicle positions are derivable.

3. The onboard system according to claim 2, wherein the wireless receiver includes a global positioning system (GPS) receiver (34) and/or a telecommunications receiver for communicating with local wayside transmitters.

4. The onboard system according to any one of the previous claims, wherein the tracking system includes a speed detector (33) configured to measure tracking data in the form of rail vehicle speed from which the updated rail vehicle positions are derivable.

5. The onboard system according to any one of the previous claims, wherein the power sources include external electrical power and any one, any two or all three of onboard battery power, onboard internal combustion engine power, and onboard fuel cell power.

6. The onboard system according to any one of the previous claims, wherein the signalling equipment is further configured to prioritise sending of the relayed changeover telegrams from the beacon reader over sending of the further changeover telegrams on to the train management system.

7. The onboard system according to any one of the previous claims, wherein the signalling equipment is further configured to command automatic braking and/or automatic acceleration of the rail vehicle in response to selected ones of the changeover telegrams.

8. The onboard system according to any one of the previous claims, wherein the train management system is further configured to communicate with the signalling equipment to adjust the predetermined track positions stored by the signalling equipment.

9. The onboard system according to any one of the previous claims, which is a first onboard system for operating a first rail vehicle, and wherein the signalling equipment of the first onboard system further has a communications interface for two-way communication with the signalling equipment of a second onboard system for operating a second rail vehicle which can form a train with the first rail vehicle.

10. A rail vehicle having:
plural drive modes powered by respective power sources of the rail vehicle;
train equipment to implement respective changeovers from any one of the drive modes to any other of the drive modes; and
the onboard system according to any one of the previous claims for operating the rail vehicle.

11. A train comprising a first rail vehicle according to claim 10 and a second rail vehicle according to claim 10, wherein the signalling equipment of the onboard system of the first rail vehicle has a first communications interface, and the signalling equipment of the onboard system of the second rail vehicle has a second communications interface, the first and second communications interfaces being connected for two-way communication therebetween.
